(19) Europäisches Patentamt
European Patent Office
Office européen des brevets

(11) EP 0 560 779 B1

(12) EUROPÄISCHE PATENTSCHRIFT

(45) Veröffentlichungstag und Bekanntmachung des Hinweises auf die Patenterteilung:
**12.06.1996 Patentblatt 1996/24**

(21) Anmeldenummer: **91917369.0**

(22) Anmeldetag: **02.10.1991**

(51) Int Cl.[6]: **G06F 15/80**, G06K 9/66

(86) Internationale Anmeldenummer:
**PCT/DE91/00775**

(87) Internationale Veröffentlichungsnummer:
**WO 92/08204 (14.05.1992 Gazette 1992/11)**

# (54) VERFAHREN ZUR ERKENNUNG UND SCHÄTZUNG DER RÄUMLICHEN LAGE VON OBJEKTEN AUS EINER ZWEIDIMENSIONALEN ABBILDUNG

METHOD OF DETECTING AND ESTIMATING THE POSITION IN SPACE OF OBJECTS FROM A TWO-DIMENSIONAL IMAGE

PROCEDE POUR LA RECONNAISSANCE ET L'EVALUATION DE LA POSITION DANS L'ESPACE D'OBJETS A PARTIR D'UNE IMAGE BIDIMENSIONNELLE

(84) Benannte Vertragsstaaten:
**DE FR GB IT**

(30) Priorität: **24.10.1990 DE 4033857**

(43) Veröffentlichungstag der Anmeldung:
**22.09.1993 Patentblatt 1993/38**

(73) Patentinhaber: **SIEMENS AKTIENGESELLSCHAFT**
**D-80333 München (DE)**

(72) Erfinder:
- **WIRTZ, Brigitte**
  **W-8000 München 90 (DE)**
- **MAGGIONI, Christoph**
  **W-8000 München 90 (DE)**

(56) Entgegenhaltungen:
**US-A- 4 185 270**

- **COMPUTER VISION GRAPHICS AND IMAGE PROCESSING Bd. 27, Nr. 1, Juli 1984, New York, US, SS. 97-114; F.P. KUHL et al.: 'Global Shape Recognition of 3-D Objects Using a Differential Library Storage'**
- **PROC. OF THE IEEE INT. CONFERENCE ON SYSTEMS, MAN, AND CYBERNETICS, August 1988, BEIJING AND SHENYANG, CHINA, Int. Academic Publ., SS. 1174-1179, XP000118221; Y. GUOQING et al.: 'Pattern analysis with adaptive logic networks'**
- **IJCNN: INT. JOINT CONFERENCE ON NEURAL NETWORKS, 17-21 Juni 1990, San Diego, US, SS. II-149 - II-155, XP000144336, MATTHEW M. YEN et al.: 'Feature maps based weight vectors for spatiotemporal pattern recognition with neural nets'**
- **PROC. OF THE 6TH INTERN. CONF. ON PATTERN RECOGNITION 19-22 Oktober 1982, Munich, DE, SS.114-128; T. KOHONEN: 'Clustering, Taxonomy, and Topological Maps for Patterns'**
- **IJCNN: INT. JOINT CONFERENCE ON NEURAL NETWORKS, 17-21 Juni 1990, San Diego, US, SS. 835-844, XP000144429; WEI-CHUNG LIN et al.: 'A connectionist approach to multiple-view based 3-D object recognition'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Verfahren zur Erkennung und Schätzung der räumlichen Lage von Objekten aus einer zweidimensionalen Abbildung

Bei den meisten Anwendungen der maschinellen Bildverarbeitung und des Bildverstehens in Anwendungsgebieten wie Robotik und Fertigungsautomatisierung, sind Verfahren zur maschinellen Erkennung dreidimensionaler Objekte und ihrer Lage im Raum von grundlegender Bedeutung. In vielen dieser Anwendungsfälle stehen Tiefendaten nicht zur Verfügung und sind auch nicht mit Hilfe von Stereobildern oder zeitlichen Bildfolgen, in denen die Objektbewegung oder die Kamerabewegung zur Gewinnung von Tiefendaten ausgewertet werden könnte, zu ermitteln. In solchen Fällen muß anhand einer einzelnen zweidimensionalen Abbildung des zu erkennenden Objektes die Objektidentität und seine Lage im Raum aus der zweidimensionalen Abbildung rekonstruiert werden. Hierzu müssen im allgemeinen Modelle für die zu erkennenden Objekte und ein Modell für den Abbildungsprozeß verwendet werden. Aus Vereinfachungsgründen werden Objekte vielfach mit Hilfe ihrer Eckpunkte und Kantenlinien modelliert. Die optische Abbildung des Raumes in die Bildebene kann in vielen Fällen mit hinreichender Genauigkeit z.B. durch die Zentralprojektion angenähert werden. Das technische Problem bei der Erkennung und Schätzung der Lageparameter dreidimensionaler Objekte im Raum aus einer zweidimensionalen Abbildung, oftmals auch als n-Punkte-Perspektivproblem bezeichnet, besteht in der Bestimmung der Lage und räumlichen Anordnung eines dreidimensionalen Objekts aus n Merkmalspunkten, die mit Hilfe geeigneter Vorverarbeitungsverfahren in einer zweidimensionalen Abbildung des zu erkennenden Objekts gefunden wurden. Beispiele für solche Merkmalspunkte sind u.a. Abbilder von Objekteckpunkten oder Abbilder von anderen markanten Punkten auf der Objektoberfläche.

Aus der Literatur sind verschiedene Verfahren zur Lageschätzung dreidimensionaler Objekte im Raum bekannt. Im wesentlichen lassen sich zwei Typen von Verfahren unterscheiden: Zum einen gibt es Ansätze zur analytischen Lösung des n-Punkte-Perspektivproblems, die sich mit der minimalen Anzahl von Korrespondenzen beschäftigen, welche man benötigt, um das Perspektivproblem starrer Objekte, d.h. das Problem der Zuordnung zwischen Objekteckpunkten und Merkmalspunkten in der Bildebene, zu lösen. Bei diesen Verfahrenstypen wird der die Abbildung modellierende Zusammenhang zwischen Punkten im Raum und Punkten in der Bildebene, z. B die Zentralprojektion, zur Aufstellung eines Gleichungssystems verwendet. Je nach der Zahl der Merkmalspunkte in der Bildebene kann dieses Gleichungssystem unterbestimmt, eindeutig lösbar, oder überbestimmt sein. Diese Verfahren verwenden deshalb im allgemeinen eine Teilmenge aller verfügbaren Merkmalspunkte in der Bildebene, welche auf ein eindeutig lösbares und gut konditioniertes Gleichungssystem führen. Ein derartiges Verfahren wird z.B. in der Veröffentlichung von R.M. Haralick, "Using Perspective Transformations in Scene Analysis", Computer Vision, Graphics and Image Processing 13, 1980, pp. 191-221, beschrieben. Verfahren dieses Typs führen im allgemeinen zu über- oder unterbestimmten Gleichungssystemen, erfordern deshalb eine Vorverarbeitung der Abbildung mit dem Ziel der Auswahl einer geeigneten Menge von Merkmalspunkten, und sind im allgemeinen wenig robust gegen Störungen.

Ein zweiter Verfahrenstyp bedient sich der iterativen Lösung überbestimmter Gleichungssysteme mit Hilfe von nichtlinearen Minimierungsverfahren. Dabei wird eine Kostenfunktion, welche durch zuvor gefundene Korrespondenzen zwischen Bildmerkmalen und Modellparametern bestimmt wird, minimiert. Ein Beispiel für diesen zweiten Verfahrenstyp ist in der Veröffentlichung von D.G. Lowe "Three-Dimensional Object Recognition from Single Two-Dimensional Images", Artificial Intelligence 31, 1987, pp. 355-395, beschrieben. Dieser zweite Verfahrenstyp ist zwar weitaus weniger empfindlich gegen Störungen, hat aber wie der erste Verfahrenstyp den Nachteil, daß ein nichtlineares analytisches Modell des optischen Abbildungsvorganges benötigt wird und mit numerischen Methoden verarbeitet werden muß.

Wei-Chung Lin et al., "A Connectionist Approach to Multiple-View Based 3-D Object Recognition" (International Joint Conference on Neural Networks, IJCNN 1990), benutzen Hopfield-Neuronale Netze (mit gewöhnlicher, zweidimensionaler Geometrie), um Identität und Lage von 3-D Objekten festzustellen; als Eingabemerkmale werden zunächst Fläche und relative Entfernungen der einzelnen Polygone benutzt, die das Objekt in seiner 2-D Projektion beschreiben. Nach der derartigen "groben" Analyse der Oberflächenübereinstimmungen werden die Eckpunkte der Polygone des unbekannten Objektes in ein zweites neuronales Netz eingegeben, das dann die Korrespondenzen zwischen diesen Eckpunkten etabliert und somit eine größte Ähnlichkeit mit einem Modellmuster feststellt.

Aus M.M. Yen und M.R. Blackburn, "Feature Maps Based Weight Vectors for Spatiotemporal Pattern Recognition With Neural Nets" (IJCNN 1990) ist ein Adaptationsverfahren für ein Kohonen-Neuronales Netz bekannt, das die Lernrate und die Kopplungsstärkefunktion mit der Zeit monoton fallen läßt.

Der Erfindung ist in den unabhängigen Ansprüchen definiert.

Das erfindungsgemäße Verfahren basiert auf der Methode der adaptiven Vektorquantisierung, welche mit Hilfe von Begriffen aus dem Bereich der neuronalen Netzwerke auch als sog.

Kohonen-Netz formuliert werden kann (T. Kohonen, "Representation of Sensory Information in Self-Organizing Feature Maps, and Relation of these Maps to Distributed Memory Networks", Proc. SPIE Optical and Hybrid computing, vol. 634, pp. 248-259, 1986). Dabei werden aus den zweidimensionalen Koordinaten von Merkmalspunkten in der

Abbildungsebene sog. Mustervektoren gebildet, welche mit abgespeicherten Referenzmustern, die in der Sprache der Kohonen-Netze auch als Gewichtskoeffizienten bezeichnet werden, verglichen werden. Jedem Referenzmuster ist dabei eine Interpretation zugeordnet, welche direkt auf die Lageparameter des zu erkennenden Objekts sowie auf die Objektidentität schließen läßt. Die gesuchten Lageparameter bzw. die gesuchte Objektkennung ergibt sich dabei als Interpretation desjenigen Referenzmusters, das dem die Merkmalspunkte der Abbildungsebene repräsentierenden Mustervektor am ähnlichsten ist.

Die Genauigkeit und Zuverlässigkeit dieser Vorgehensweise kann noch erheblich verbessert werden, wenn gemäß den Ansprüchen 2 bzw. 4 anstelle der Interpretation des dem Mustervektor ähnlichsten Referenzmusters eine Lageschätzung durch Referenzmusterinterpolation durchgeführt wird.

Die korrekte bzw. optimale Zuordnung zwischen Referenzmustern und Interpretation bzw. Lageparametern und Objektkennungen wird mit Hilfe eines Lernverfahrens gefunden, bei dem die Gesamtheiten der Referenzmuster und Interpretationen schrittweise unter dem Einfluß einer großen Zahl von Trainingsmustervektoren, ausgehend von einer anfänglich zufälligen Wahl, verändert wird. Am Ende dieses Lernvorgangs repräsentieren die Referenzmuster die statistische Verteilung der Trainingsmuster, und die strukturellen Eigenschaften der zu erkennenden Objekte sowie die strukturellen Eigenschaften des optischen Abbildungsprozesses sind in der Zuordnung zwischen Referenzmustern und Interpretationen kodiert.

Weiterbildungen der Erfindung ergeben sich aus den Unteransprüchen.

Figur 1 zeigt einen in die Abbildungsebene projizierten Quader mit Eckpunkten 1, 2, ..., 7 sowie die zu den Eckpunkten 1 bzw. 3 gehörigen zweidimensionalen Koordinaten q(1), ..., p(3).

Figur 2 zeigt einen Ablaufplan des Verfahrens zur Lageschätzunc bzw. zur Objekterkennung bei gleichzeitiger Lageschätzung.

Figur 3 zeigt einen Ablaufplan des Verfahrens zur Adaption von Referenzmustern zur Schätzung von Lageparametern bzw. zur Objekterkennung bei gleichzeiitiger Schätzung von Lageparametern.

Anhand eines bevorzugten Ausführungsbeispieles wird die Erfindung im folgenden weiter erläutert.

Für die typischen Anwendungen, z.B. in der Robotik, werden zweidimensionale Abbildungen von dreidimensionalen Objekten mit Hilfe elektronischer Kameras erzeugt. Dabei wird mit Hilfe einer optischen Abbildung der dreidimensionale Raum in eine zweidimensionale Bildebene projiziert. Die strukturellen Eigenschaften dieses optischen Abbildungsprozesses hängen von den optischen Eigenschaften der verwendeten Kamera ab und können im allgemeinen durch das mathematische Modell der Zentralprojektion (auch perspektivische Projektion genannt) hinreichend genau beschrieben werden. Bei der Zentralprojektion wird jedem Raumpunkt X, Y, Z ein Punkt p, q in der Bildebene wie folgt zugeordnet:

$$(1) \qquad (p, q) = (f.X/Z,\ f.Y/Z)$$

wobei f die Brennweite des optischen Abbildungssystems bezeichnet (Y.Shirai "Three-Dimensional Computer Vision", Springer-Verlag, Berlin, Heidelberg, New York, 1987, 11-13). Das Ergebnis einer solchen optischen Abbildung mit Hilfe einer elektronischen Kamera ist am Ende eine zweidimensionale Abbildung des dreidimensionalen Objekts, welche in einem digitalen Bildspeicher vorliegt.

Aus einer derartigen Abbildung, welche als zweidimensionale Matrix von Bildpunkten aufgefaßt werden kann, lassen sich mit Hilfe verschiedener Methoden der digitalen Bildvorverarbeitung markante Punkte in der Bildebene gewinnen, welche auch als Merkmalspunkte bezeichnet werden. Figur 1 zeigt einen in die zweidimensionale Bildebene deren Koordinatenachsen mit q bzw p bezeichnet sind, projizierten dreidimensionalen Quader mit sichtbaren Eckpunkten 1, 2, ..., 7. Sind mit Hilfe geeigneter Methoden der digitalen Bildvorverarbeitung die Eckpunkte des Quaders in der Bildebene gefunden, so stehen deren zweidimensionale Koordinaten zur Lageschätzung bzw. Objekterkennung zur Verfügung. Eine Übersicht über die zur Verfügung stehenden Methoden zur Merkmalsextraktion findet sich in (Y. Shirai 1987). Als Merkmalspunkte eignen sich in erster Linie die Abbilder von Objekteckpunkten. Diese lassen sich in der Bildebene auf vorteilhafte Weise als Schnittpunkte von Objektkanten auffinden. Damit ist das Problem der Lokalisierung von Eckpunkten in der Bildebene auf die Detektion von Kanten zurückgeführt. Zur Detektion von Objektkanten in der Bildebene stehen eine Reihe von Verfahren zur Verfügung, von denen die wichtigsten auf Kantenoperatoren oder auf der Hough-Transformation beruhen (J. Shirai 1987).

Um auf diese Weise vorverarbeitete digitale Bilder als Objekte interpretieren zu können, muß die korrekte Zuordnung zwischen den Punkten eines entsprechenden Objektmodells und den Merkmalspunkten in der Bildebene gefunden werden. Dieses Problem wird durch die unbekannte Lage und unbekannte räumliche Orientierung der abgebildeten Objekte erheblich erschwert. Aus diesem Grund muß einer wissens- und modellbasierten Interpretation der vorverarbeiteten Bilder eine geeignete Lageschätzung vorangehen, deren Ziel die Bestimmung von Lageparametern des abgebildeten Objekts, d.h. von Rotationsparametern und eventuell einer Verschiebung ist.

Die erfindungsgemäße Lösung dieses Problems bedient sich der Methode der adaptiven Vektorquantisierung, die auch als Kohonen-Netz bezeichnet wird. Da es sich hierbei um eine adaptive Methode handelt, setzt die technische Anwendung dieser Methode ein geeignetes Lernverfahren voraus. Ein solches Lernverfahren wird deshalb im folgenden mit Bezug auf Figur 3 beschrieben. Zur Durchführung dieses Lernverfahrens benötigt man ein räumliches Gitter von Neuronen, d.h. eine durch ganze Zahlen i indizierbare Gesamtheit RG von Referenzmustern m(i), wobei jedem Index i der Gesamtheit umkehrbar eindeutig ein Gitterpunkt (i(l), i(2), i(3)) mit ganzen Zahlen i(l), i(2) und i(3) zugeordnet ist. Jedes Neuron, d.h. jedes Element i der Gesamtheit ordnet bei einem vorgegebenen Mustervektor v seinem Referenzmuster m(i) mit Hilfe einer für alle Neuronen gleichen Ausgabefunktion a(v,m) einen zu ihm gehörigen Ausgabewert a(v, m(i)) zu. Zu Beginn des Lernverfahrens werden die Werte aller Referenzmuster m(i) völlig zufällig gewählt.

Um mit Hilfe eines solchen Kohonen-Netzes eine Lageschätzung durchführen zu können, wird jedem Neuror i eine Interpretation x(i) = (x(i,l), ..., x(i, N)) zugeordnet. Zu Beginn des Lernverfahrens, d.h. der Adaption der Referenzmuster, werden die Werte der Komponenten aller Interpretationen x(i) ebenfalls völlig zufällig gewählt. Die Komponenten der Interpretationen x(i) entsprechen dabei den zu schätzenden Lageparametern des abgebildeten Objektes.

Zur Durchführung der Adaption wird eine zeitabhängige Lernrate L(t) vorgegeben, die mit der Zeit monoton fällt. Diese Lernrate bestimmt die Geschwindigkeit des Lernvorgangs und wird um so kleiner, je weiter der Lernvorgang fortgeschritten ist. Bei experimentellen Untersuchungen des erfindungsgemäßen Verfahrens hat sich eine Lernratenfunktion der Form

$$(2) \qquad L(t) = L(\mathrm{Start}).\exp\left(\frac{t}{t(\mathrm{Ende})}\ \ln\left(\frac{L(\mathrm{Ende})}{L(\mathrm{Start})}\right)\right.$$

als vorteilhaft erwiesen.

Dabei bezeichnen L(Start), L(Ende) bzw. t(Ende) eine vorgegebene anfängliche Lernrate, eine vorgegebene finale Lernrate bzw. einen Endzeitpunkt des Lernvorgangs. Ferner wird eine Kopplungsstärkefunktion h(i,j,t) vorgegeben, die je zwei Punkten (i(1),i(2),i(3)), (j(1),j(2), j(3)) auf dem Gitter eine Kopplungsstärke h zuordnet, welche monoton mit dem Abstand der Gitterpunkte und monoton mit der Zeit fällt. Experimentelle Untersuchungen haben gezeigt, daß eine besonders vorteilhafte Wahl der Kopplungsstärkefunktion durch

$$(3) \qquad h(i,j,t) = \exp\left(-\frac{\|i-j\|^2}{2\,.\,s^2(t)}\right)$$

mit

$$(4) \qquad s(t) = s(\mathrm{Start})\,.\,\exp\left(\frac{t}{t(\mathrm{Ende})}\ \ln\left(\frac{s(\mathrm{Ende})}{s(\mathrm{Start})}\right)\right)$$

gegeben ist. Dabei bezeichnet s(t) die momentane Reichweite der Kopplungsstärke funktion h, und die Symbole s (Start) bzw. s(Ende) bezeichnen vorgegebene anfängliche bzw. finale Reichenweiten der Kopplungsstärkefunktion.

Diese Wahl der Kopplungsstärkefunktion gewährleistet, daß die Kopplungsstärke zwischen zwei Neuronen monoton mit dem Abstand zwischen diesen Neuronen abnimmt, und daß die Kopplungsstärke bei gegebenem Abstand monoton mit der Zeit fällt. Hierdurch wird die Kopplung zwischen benachbarten Neuronen auf dem Gitter mit fortschreitender Zeit ständig kurzreichweitiger und bei gegebenem Abstand ständig schwächer. Vorzugsweise wird als Abstandsmaß zwischen den Neuronen der euklidische Abstand gewählt.

Nachdem die Parameter des Lernverfahrens vorgegeben sind, beginnt nun das eigentliche Lernverfahren. Zu jedem Zeitschritt t wird ein Trainingsmustervektor v(t) = (v(l,t), ...v(M,t)), der aus zweidimensionalen Koordinaten von Merkmalspunkten in der Abbildung gebildet ist, und zu diesem Trainingsmustervektor gehörige Lageparameter XT(t) = (XT(l,t), ..., XT(N,t)) vorgegeben. Bei jedem Zeitschritt t werden nun für jeden Index i aus diesem vorgegebenen Trainingsmustervektor v(t) und den momentanen Werten der Referenzmuster m(i,t) = (m(i,l,t),...m(i,M,t)) die momentanen Ausgabewerte a(i,t) = a(v(t),m(i,t)) mit Hilfe der für alle Neuronen identischen Ausgabefunktion a(v,m) berechnet. Dieser Ausgabewert ist ein Maß für die Ähnlichkeit zwischen dem momentanen Wert des Referenzmusters m(i,t) des Neurons i und dem angelegten Trainingsmustervektor v(t). Um dasjenige Neuron in der Gesamtheit der Neuronen zu ermitteln, dessen Referenzmuster m dem angelegten Trainingsmustervektor am ähnlichsten ist, wird derjenige Index w(t) gesucht, dessen zugehöriger Ausgabewert a(w,t) optimal ist.

Nach der Ermittlung des optimalen Ausgabewertes und des zu ihm gehörigen Index w(t) wird der eigentliche zu diesem Zeitpunkt t gehörige Adaptionsschritt durchgeführt: Die momentanen Werte der Referenzmuster m (i,t) aller Neuronen i und die dazugehörigen Lageparameter x(i,t) werden mit Hilfe der Beziehungen

$$(5) \qquad m(i,t+l) = m(i,t) + L(t).h(i,w,t).(v(t)-m(i,t))$$

$$(6) \qquad x(i,t+l) = x(i,t) + L(t).h(i,w,t).(XT(t)-x(i,t))$$

adaptiert.

Durch die Adaptionsbeziehungen (5) und (6) ist gewährleistet, daß die Werteverteilung der Referenzmuster der statistischen Verteilung der Trainingsmustervektoren im Laufe des Lernvorgangs immer ähnlicher wird, und daß die den Trainingsmustervektoren und ihren zugehörigen Lageparametern entsprechenden Zusammenhänge zwischen Mustervektoren und Lageparametern durch die sich während der Adaption einstellende Beziehung zwischen den Lageparametern der Neuronen und den zugehörigen Referenzmustern widergespiegelt wird. Um die Konvergenz des

Lernverfahrens zu optimieren, ist die Wahl einer geeigneten Ausgabefunktion a(v,m) entscheidend. Verschiedene experimentelle Untersuchungen haben gezeigt, daß hauptsächlich zwei verschiedene mögliche Wahlen der Ausgabe funktion a(v,m) zu einer optimalen Leistungsfähigkeit es Verfahrens führen. Die erste mögliche Wahl ist das Quadrat des euklidischen Abstands zwischen dem Mustervektor und dem Referenzmustervektor eines Neurons,

$$(7) \quad a(v,m(i)) = || v - m(i) ||^2 = \sum_{k=1}^{M} (v(k) - m(i,k))^2.$$

Es ergibt sich nun aus den Beziehungen (5), (6) und (7), daß durch Minimierung der Ausgabewerte bei der Ermittlung des optimalen Ausgabewertes a(m,t) die Konvergenz des Lernvorgangs im Sinne einer adaptiven Vektorquantisierung gewährleistet werden kann.

In solchen Fällen, in denen die euklidische Norm der Mustervektoren konstant ist, ist es vorteilhaft, mit normierten Referenzmustern m(i) zu arbeiten. In diesem Fall kann anstelle des euklidischen Abstandes eine andere Ausgabefunktion gewählt werden, die durch

$$(8) \quad a(v,m(i)) = \sum_{k=1}^{M} m(i,k)\, v(k)$$

gegeben ist. Bei Verwendung der Ausgabefunktion nach Gleichung (8) ist der optimale Ausgabewert der maximale Ausgabewert.

Dies hängt damit zusammen, daß der Mustervektor mit den Komponenten v(k), k = l, ... M dem Referenzmuster m(i) mit den Komponenten m(i,k), k = l, ... m umso ähnlicher ist, je größer das durch Gleichung (8) gegebene Skalarprodukt zwischen dem Mustervektor v und dem Referenzmuster m ist.

Ist das Lernverfahren abgeschlossen, kann das trainierte neuronale Netz (oder mit anderen Worten ausgedrückt, die adaptierte Gesamtheit von Referenzmustern) zur Lageschätzung dreidimensionaler Objekte herangezogen werden. Dazu werden aus einer gegebenen zweidimensionalen Abbildung des dreidimensionalen Objekts mit den bereits beschriebenen Verfahren zur Vorberarbeitung digitaler Bilder (Y. Sirai 1987) Merkmalspunkte extrahiert und die zweidimensionalen Koordinaten dieser Merkmalspunkte zu einem Mustervektor v zusammengefaßt. Dies Kann vorzugsweise dadurch geschehen, daß die Komponenten v(k) des Mustervektors v in der Form

$$(9) \qquad v(k) = (p(k), q(k)) \quad k = l, ..., M$$

gewählt werden, wobei p(k) und q(k) die zweidimensionalen Koordinaten des Merkmalspunktes k in der Abbildungsebene (Figur 1) sind. Zur Schätzung der räumlichen Lage des durch diesen Mustervektor v repräsentierten dreidimensionalen Objekts wird nun gemäß Figur 2 für jeden Index i der Gesamtheit von Neuronen der Ausgabewert a(i) = a(v, m(i)) berechnet. Daraufhin wird der Index w desjenigen Neurons gesucht, welches den optimalen Ausgabewert a(w) geliefert hat. Die Komponenten der Interpretation x(w) dieses Neurons mit dem Index w können nun als die optimale Schätzung der Lageparameter des durch den Mustervektor v repräsentierten Objekts angesehen werden.

Die Qualität dieser Schätzung läßt sich aber noch merklich verbessern, wenn anstelle der Interpretation x(w) des optimalen Neurons mit dem Index w eine interpolierte Interpretation zur Lageschätzung verwendet wird. Eine solche interpolierte Interpretation läßt sich wie folgt berechnen:

In der näheren Umgebung des optimalen Neurons mit dem Index w befinden sich infolge der speziellen Eigenschaften der bereits beschriebenen Referenzmusteradaption andere Neuronen, deren Referenzmuster zu dem angelegten Mustervektor v ebenfalls ähnlich sind, wenn auch die zu diesem Neuronen gehörenden Ausgabewerte lediglich suboptimal sind. Geleitet von der Vorstellung, daß die möglichen Mustervektoren v ein Kontinuum von Vektoren in einem M-dimensionalen Raum bilden, kann im allgemeinen vermutet werden, daß ein verbesserter Referenzmustervektor durch Interpolation zwischen den Referenzmustervektoren der Neuronen in der unmittelbaren Umgebung des Neurons mit optimalem Ausgabewert gefunden werden kann.

Zur Durchführung dieser Interpolation werden folgende Schritte durchgeführt:
Es wird eine Umgebung U des Neurons w mit optimalem Ausgabewert a(w) gewählt, die vorzugsweise aus den nächsten Nachbarn des Neurons w mit optimalen Ausgabewert besteht. Anschließend wird für jedes Neuron u dieser Umgebung U die konvexe Linearkombination

$$(10) \qquad m(w,u,b) = b \,.\, m(w) + (1-b) \,.\, m(u)$$

gebildet. Hierbei ist b eine Zahl zwischen 0 und 1. Für diesen durch b parametrisierten interpolierten Referenzmustervektor m(w,u,b) wird eine ebenfalls durch b parametrisierte Ausgabefunktion a(v,m(w,u,b)) berechnet. Als Ausgabefunktion wird vorzugsweise wieder eine der beiden in den Gleichungen (7) bzw. (8) angegebenen Formen verwendet. Aufgrund der einfachen analytischen Form der beschriebenen Ausgabefunktionen, läßt sich ein optimaler Wert der durch b parametrisierten Ausgabefunktion in Abhängigkeit von b geschlossen aufsuchen. Dieser optimale Wert von b wird für jedes Neuron u der Umgebung mit b(u) bezeichnet. Auf diese Weise ergibt sich für sämtliche Neuronen der Umgebung ein Zahlenwert b(u) zwischen 0 und 1 und ein dazu gehöriges interpoliertes Refernzmuster m(w,u,b(u)). Unter diesen interpolierten Referenzmustern wird nun das optimale interpolierte Referenzmuster dadurch gefunden, daß für sämtliche interpolierten Referenzmuster m(w,u,b,(u)) aller Neuronen u der Umgebung die zugehörigen Ausgabewerte a(v,m(w, u,b(u))) berechnet werden. Der optimale und damit verbesserte interpolierte Referenzmustervektor m(w,opt) ergibt sich nun als derjenige Referenzmustervektor mit optimalem zugehörigen Ausgabewert a(v, m (w,u,b (u)). Bezeichnen wir den zu diesem Referenzmuster gehörigen Interpolationskoeffizienten mit b(opt), so ergibt sich eine verbesserte Lageschätzung x nach der Formel

$$(11) \qquad x = b(opt) \,.\, x(w) + (1-b(opt)) \,.\, x(opt)$$

wobei x(opt) die zu dem Neuron mit optimalen interpolierten Referenzmuster gehörige Interpretation ist.

Experimentelle Untersuchungen haben gezeigt, daß bei Benutzung des hier beschriebenen Interpolationsverfahrens die Genauigkeit der Lageschätzung um ca. 85% verbessert werden konnte.

Eine noch weitergehende Verbesserung der Lageschätzung läßt sich durch eine andere Art der Interpolation erreichen: Dazu bildet man aus allen Referenzmustern m(u) mit u aus einer vorgegebenen Umgebung U von b die konvexe Linearkombination

$$(12) \qquad m = \sum_{u \in U} b(u) \cdot m(u)$$

$$(13) \qquad = b(w) \cdot m(w) + \sum_{u \neq w} b(u) \cdot m(u)$$

mit

$$(14) \qquad \sum_{u \in U} b(u) = b(w) + \sum_{u \neq w} b(u) = 1$$

und

$$(15) \qquad 0 \le b(u),\ b(w) \le 1.$$

Anschließend sucht man das Optimum der Funktion a(v,m) als Funktion der Koeffizienten b(u) und b(w). Mit den optimalen Koeffizienten b(u,opt) und b(w,opt) berechnet man dann die interpolierte Lageschätzung zu

$$(16) \qquad x = \sum_{u \in U} b(u,opt) \cdot x(u)$$

$$(17) \qquad = b(w,opt) \cdot x(w) + \sum_{u \neq w} b(u, opt) \cdot x(u)$$

Die weitgehende Unempfindlichkeit des Verfahrens zur Lageschätzung gegenüber Fehlern bei der Bestimmung der Koordinaten von Merkmalspunkten läßt sich noch verbessern, wenn man anstelle der Ausgabefunktion (7) die Ausgabe funktion

$$(18) \qquad a(v,m(i)) = \sum_{k=1}^{M} g(v,k) \cdot (v(k) - m(i,k))^2$$

verwendet, bei der die Gewichte g(v,k) ein Maß für die Zuverlässigkeit bzw. Genauigkeit der Werte der Komponenten

v(k) des Mustervektors v sind. Zweckmäßig setzt man dazu g(v,k) = 1, falls v(k) ohne Unsicherheit vorliegt und g(v,k) = 0, falls der Wert von v(k) unbekannt ist. Für alle Fälle zwischen diesen Extremen liegt g(v,k) zwischen 0 und 1.

Das hier beschriebene Verfahren läßt sich auch dann noch mit Erfolg anwenden, wenn nicht nur die räumliche Lage und Orientierung eines bekannten Objekts geschätzt werden soll, sondern wenn darüber hinaus die Identität eines a priori unbekannten Objektes, welches einer bekannten Menge von Objekten entnommen ist, gleichzeitig mit der Lage und Orientierung dieses Objekts im Raum ermittelt werden soll. Um das beschriebene Verfahren um diesen Leistungsumfang zu erweitern, ist zu den den zu schätzenden Lageparametern entsprechenden Komponenten der Interpretationen eine weitere Komponente, welche der Objektkennung entspricht, hinzuzufügen. Bei der Durchführung des Lernverfahrens ist dann zu jedem Trainingsmustervektor neben den zu diesem Trainingsmustervektor gehörigen Lageparametern die zutreffende Objektkennung anzugeben. Nach Ablauf des so durchgeführten Lernverfahrens ist das neuronale Netz somit in der Lage, neben den unbekannten Lageparametern auch die Objektidentität zu bestimmen.

Dabei ist aber zu beachten, daß bei Verwendung der Interpolationsverfahren nur die den Lageparametern entsprechenden Komponenten der Interpretationen interpoliert werden, da eine Linearkombination von Objektkennzahlen sinnlos ist.

## Patentansprüche

1. Verfahren zur Schätzung von Lageparametern eines Objekts im Raum aus einer zweidimensionalen Abbildung unter Verwendung eines Kohonen-Netzes mit einem räumlichen Gitter von Neuronen,

   a) bei dem durch ganze Zahlen i, die jedes Neuron i des Kohonen-Netzes eindeutig identifizieren, indizierbare Gewichtsvektoren m(i) = (m(i, 1), ..., m(i, M) der Dimension M und den Gewichtsvektoren m(i) zugeordnete Lageparameter x(i) = (x(i, 1), ..., x(i, N) der Dimension N vorgegeben sind, wobei jedem Index i ein Punkt (i (1), i(2), i(3)) auf einem Gitter im dreidimensionalen Raum umkehrbar eindeutig zugeordnet ist,
   b) bei dem aus zweidimensionalen Koordinaten p(k), q(k) von Merkmalspunkten in der Abbildung ein Mustervektor v = (v(1), ..., v(k), ..., v(M)) gebildet wird, wobei v(k) jeweils in der Form v(k) = (p(k), q(k)) einen Merkmalspunkt in der Abbildung beschreibt,
   c) bei dem der Mustervektor v = (v(1) ..., v(k), ..., v(M)) an jedes Neuron i des Kohonen-Netzes angelegt wird,
   d) bei dem in jedem Neuron i des Kohonen-Netzes jeweils ein Ausgabewert a(i) = a(v, m(i)) für den angelegten Mustervektor v = (v(1), ..., v(k), ..., v(M)) ermittelt wird, und
   e) bei dem die gesuchten Lageparameter sich ergeben aus jeweils dem dem Neuron i zugeordneten Lageparameter x(i) = (x(i, 1), ..., x(i, N), das den optimalen Ausgabewert a(v, m(i)) aufweist.

2. Verfahren zur Schätzung von Lageparametern eines Objekts im Raum aus einer zweidimensionalen Abbildung unter Verwendung eines Kohonen-Netzes mit einem räumlichen Gitter von Neuronen,

   - bei dem die Verfahrensschritte a) bis d) des Anspruchs 1 durchgeführt werden,
   - bei dem für alle Gitterpunkte u aus einer vorgegebenen Umgebung U eines Gitterpunktes w, der durch das Neuron i identifiziert wird, das den optimalen Ausgabewert a(v, m(i)) aufweist, ein Optimum einer Funktion

     $$A(u, b) = a(v, b \bullet m(w) + (1 - b) \bullet m(u))$$

     einer reellen Veränderlichen b mit $0 \leq b \leq 1$ ermittelt wird,
   - bei dem unter allen Gitterpunkten u der Umgebung des Gitterpunktes w derjenige Gitterpunkt opt ermittelt wird, für den gilt:
     A(opt, b(opt)) ist optimal unter allen A(u, b(u)),
     wobei b(u) die Lage des Optimums von A(u, b) als Funktion von b auf dem Intervall $0 \leq b \leq 1$ bezeichnet, und
   - bei dem die gesuchten Lageparameter x(i) sich ergeben aus der Beziehung

     $$x(i) = b(opt) \bullet x(w) + (1-b(opt)) \bullet x(opt)$$

     als konvexe Linearkombination aus den Lageparametern zweier Gitterpunkte.

3. Verfahren zur Schätzung von Lageparametern eines Objekts im Raum aus einer zweidimensionalen Abbildung unter Verwendung eines Kohonen-Netzes mit einem räumlichen Gitter von Neuronen,

   - bei dem die Verfahrensschritte a) bis d) des Anspruchs 1 durchgeführt werden,
   - bei dem für alle Gitterpunkte u aus einer vorgegebenen Umgebung U eines Gitterpunktes w, der durch das Neuron i identifiziert wird, das den optimalen Ausgabewert a(v, m(i)) aufweist, ein Optimum einer Funktion

$$A(b(u), b(w)) = a(v, b(w) \bullet m(w) + \sum_{u \neq w} b(u) \bullet m(u))$$

einer reellen Veränderlichen b mit $0 \leq b \leq 1$ ermittelt wird, und

- bei dem die gesuchten Lageparameter x(i) sich ergeben aus der Beziehung

$$x(i) = b(w, opt) \bullet x(w) + \sum_{u \neq w} b(u, opt) \bullet x(u)$$

als konvexe Linearkombination von Lageparametern x(w) und x(u).

**4.** Verfahren zur Erkennung eines Objekts und zur Schätzung von Lageparametern eines Objekts im Raum aus einer zweidimensionalen Abbildung unter Verwendung eines Kohonen-Netzes nach einem der Ansprüche 1 bis 3, bei dem zusätzlich zu den Lageparametern Identifikatoren der zu erkennenden Objekte, die den Neuronen i zugeordnet werden, zur Objekterkennung berücksichtigt werden.

**5.** Verfahren zur Adaption von Gewichtsvektoren m(i) = (m(i, 1), ..., m(i, M) zur Schätzung von Lageparametern eines Objekts im Raum aus einer zweidimensionalen Abbildung unter Verwendung eines Kohonen-Netzes mit einem räumlichen Gitter von Neuronen,

a) bei dem durch ganze Zahlen i, die jedes Neuron i des Kohonen-Netzes eindeutig identifizieren, indizierbare Gewichtsvektoren m(i) = (m(i, 1), ..., m(i, M) der Dimension M und den Gewichtsvektoren m(i) zugeordnete Lageparameter x(i) = (x(i, 1), ..., x(i, N) der Dimension N vorgegeben sind wobei jedem Index i ein Punkt (i(1), i(2), i(3)) auf einem Gitter im dreidimensionalen Raum umkehrbar eindeutig zugeordnet ist, und
b) bei dem für jeden Zeitpunkt t der Adaption

- eine Lernrate L(t) vorgegeben ist, die mit der Zeit monoton fällt,
- eine Kopplungsstärkefunktion h(i, j, t) vorgegeben ist, die je zwei Punkten (i(1, i(2), i(3)); (j(1), j(2), j(3)) auf einem Gitter, das durch die Neuronen i des Kohonen-Netzes gebildet wird, eine Kopplungsstärke h zuordnet, welche monoton mit dem Abstand der Gitterpunkte und monoton mit der Zeit fällt,
- ein Trainingsmustervektor v(t) = (v(1, t), ..., v(M, t)) der Dimension M, der aus zweidimensionalen Koordinaten von Merkmalspunkten in der Abbildung gebildet ist, und zu diesem Trainingsmustervektor gehörige Lageparameter XT(t) = (XT(1, t), ..., XT(N, t)) vorgegeben ist,
- für jedes Neuron i aus dem vorgegebenen Trainingsmustervektor v(t) und den momentanen Gewichtsvektoren m(i, t) zum Zeitpunkt t die momentanen Ausgabewerte a(i, t) = a(v(t), m(i, t)) zum Zeitpunkt t ermittelt werden,
- bei dem das Neuron w mit optimalem Ausgabewert a(v, m(i)) ermittelt wird,
- bei dem die Gewichtsvektoren m(i, t) jedes Neurons i mit Hilfe der Beziehungen

$$m(i, t+1) = m(i, t) + L(t) \bullet h(i, w, t) \bullet (v(t) - m(i, t))$$

$$x(i, t+1) = x(i, t) + L(t) \bullet h(i, w, t) \bullet (XT(t) - x(i, t))$$

adaptiert werden.

**6.** Verfahren nach Anspruch 5, bei dem zusätzlich Identikatoren zur Objekterkennung bei der Adaption berücksichtigt werden

**7.** Verfahren nach einem der Ansprüche 5 oder 6, bei dem die Lernrate L(t) folgende Form aufweist:

$$L(t) = L(Start) \bullet \exp\left(\frac{t}{t(Ende)} \ln\left(\frac{L(Ende)}{L(Start)}\right)\right),$$

wobei L(Start) eine anfängliche Lernrate bezeichnet und L(Ende) eine finale Lernrate bezeichnet bis zu einem Endzeitpunkt t(Ende) der Adaption.

**8.** Verfahren nach einem der Ansprüche 5 bis 7,
bei dem die Kopplungsstärkefunktion h(i, j, t) die folgende Form aufweist:

$$h(i,j,t) = \exp\left(-\frac{\|i-j\|^2}{2 \bullet s^2(t)}\right)$$

*mit*

$$s(t) = s(Start) \bullet \exp\left(\frac{t}{t(Ende)} \ln\left(\frac{s(Ende)}{s(Start)}\right)\right),$$

wobei s(Start) eine vorgegebene anfängliche Reichweite bezeichnet und s(Ende) eine vorgegebene finale Reichweite bezeichnet bis zu einem Endzeitpunkt t(Ende) der Adaption.

**9.** Verfahren nach einem der vorhergehenden Ansprüche,

- bei dem die Ausgabewerte a(i) durch folgende Beziehung ermittelt werden:

$$a(v,m(i)) = \|v - m(i)\|^2 = \sum_{k=1}^{M} (v(k) - m(i,k))^2,$$

  und
- bei dem die optimalen Ausgabewerte durch die minimalen Ausgabewerte a(i) gebildet werden.

**10.** Verfahren nach einem der vorhergehenden Ansprüchen,

- bei dem die Ausgabewerte a(i) durch folgende Beziehung ermittelt werden:

$$a(v,m(i)) = \sum_{k=1}^{M} g(v,k) \bullet (v(k) - m(i,k))^2,$$

  wobei Gewichte g(v, k) ein Maß für die Zuverlässigkeit der Werte der Komponenten v(k) des Mustervektors v darstellen, und
- bei dem die optimalen Ausgabewerte durch die minimalen Ausgabewerte a(i) gebildet werden.

**11.** Verfahren nach einem der vorhergehenden Ansprüche,

- bei dem die Ausgabewerte a(i) durch folgende Beziehung ermittelt werden:

$$a(v,m(i)) = \sum_{k=1}^{M} m(i,k) \bullet v(k),$$

  und
- bei dem die optimalen Ausgabewerte durch die maximalen Ausgabewerte a(i) gebildet werden.

**12.** Verfahren nach einem der vorhergehenden Ansprüche,
bei dem die Lageparameter x(i) mindestens Rotationswinkel bezogen auf drei Achsen eines räumlicher Koordinatensystems aufweisen.

## Claims

**1.** Method for estimating position parameters of an object in space from a two-dimensional image by using a Kohonen network having a spatial grid of neurons,

a) in which weighting vectors m(i) = (m(i, 1), ..., m(i, M)) of dimension M, which can be indexed by whole numbers i which uniquely identify each neuron i of the Kohonen network, are provided, and position parameters x(i) = (x(i, 1), x(i, N)) of dimension N assigned to the weighting vectors m(i) are provided, it being the case that each index i is assigned a point (i(1), i(2), i(3)) on a grid in three-dimensional space in a reversible unique fashion,
b) in which a master vector v = (v(1), ..., v(k), ..., v(M)) is formed from two-dimensional coordinates p(k), q(k) of feature points in the image, v(k) respectively describing a feature point in the image in the form of v(k) = (p (k), q(k)),
c) in which the master vector v = (v(1), ..., v(k), ..., v(M)) is applied to each neuron i of the Kohonen network,
d) in which an output value a(i) = a(v, m(i)) is determined for the applied master vector v = (v(1), ..., v(k), ..., v (M)) in each case in each neuron i of the Kohonen network, and
e) in which the position parameters being sought are yielded from the position parameter x(i) = (x(i, 1), ..., x (i, N), which is respectively assigned to the neuron i and has the optimum output value a(v, m(i)).

**2.** Method for estimating position parameters of an object in space from a two-dimensional image by using a Kohonen network having a spatial grid of neurons,

- in which the method steps a) to d) of Claim 1 are carried out,
- in which an optimum of a function

$$A(u, b) = a(v, b \bullet m(w) + (1 - b) \bullet m(u))$$

of a real variable b, where $0 \leq b \leq 1$, is determined for all grid points u from a prescribed environment U of a grid point w which is identified by the neuron i which has the optimum output value a(v, m(i)),
- in which from among all the grid points u of the environment of the grid point w that grid point opt is determined for which it holds that:
A(opt, b(opt)) is optimal among all A(u, b(u)),
b(u) denoting the position of the optimum of A(u, b) as a function of b in the interval $0 \leq b \leq 1$, and
- in which the position parameters x(i) being sought are yielded from the relationship

$$x(i) = b(opt) \bullet x(w) + (1-b(opt)) \bullet x(opt)$$

as a convex linear combination from the position parameters of two grid points.

**3.** Method for estimating position parameters of an object in space from a two-dimensional image using a Kohonen network having a spatial grid of neurons,

- in which the method steps a) to d) of Claim 1 are carried out,
- in which an optimum of a function

$$A(b(u), b(w)) = a(v, b(w) \bullet m(w) + \sum_{u \neq w} b(u) \bullet m(u))$$

of a real variable b, where $0 \leq b \leq 1$, is determined for all grid points u from a prescribed environment U of a grid point w which is identified by the neuron i which has the optimum output value a(v, m(i)),
- in which the position parameters x(i) being sought are yielded from the relationship

$$x(i) = b(w, opt) \bullet x(w) + \sum_{u \neq w} b(u, opt) \bullet x(u)$$

as the convex linear combination of position parameters x(w) and x(u).

**4.** Method for detecting an object and estimating position parameters of an object in space from a two-dimensional image by using a Kohonen network according to one of Claims 1 to 3, in which, for the purpose of object detection, in addition to the position parameters consideration is given to identifiers of the objects to be detected, which are assigned to the neurons i.

**5.** Method for adapting weighting vectors m(i) = (m(i, 1), ..., m(i, M) for the purpose of estimating position parameters of an object in space from a two-dimensional image by using a Kohonen network having a spatial grid of neurons,

a) in which weighting vectors m(i) = (m(i, 1), ..., m(i, M)) of dimension M which can be indexed by whole numbers i which uniquely identify each neuron i of the Kohonen network, are provided, and position parameters x(i) = (x(i, 1), .., x(i, N)) of dimension N assigned to the weighting vectors m(i) are provided, it being the case that each index is assigned a point (i(1), i(2), i(3)) on a grid in three-dimensional space in a reversible unique fashion, and
b) in which for each instant t of the adaptation

- a learning rate L(t) is prescribed which decreases monotonically with time,
- a coupling strength function h(i, j, t) is prescribed which assigns the two points (i(1, i(2), i(3)), (j(1), j(2), j(3)) on a grid which is formed by the neurons i on the Kohonen network in each case a coupling strength h which decreases monotonically with the spacing of the grid points and monotonically with time,
- a training master vector v(t) = (v(1, t), ..., v(M, t)) of dimension M, which is formed from two-dimensional coordinates of feature points in the image, and position parameters XT(t) = (XT(1, t), ..., XT(N, t)) belonging to this training master vector is prescribed,
- for each neuron i the instantaneous output values a(i, t) = a(v(t), m(i, t)) are determined at the instant t from the prescribed training master vector v(t) and the instantaneous weighting vectors m(i, t) at the instant t,
- in which the neuron w is determined by means of the optimum output value a(v, m(i)), and
- in which the weighting vectors m(i, t) of each neuron i are adapted with the aid of the relationships

$$m(i, t+1) = m(i, t) + L(t) \bullet h(i, w, t) \bullet (v(t) - m(i, t))$$

$$x(i, t+1) = x(i, t) + L(t) \bullet h(i, w, t) \bullet (XT(t) - x(i, t)).$$

**6.** Method according to Claim 5, in which, for the purpose of object detection, identifiers are additionally given consideration during adaptation.

**7.** Method according to one of Claims 5 and 6, in which the learning rate L(t) has the following form:

$$L(t) = L(Start) \bullet \exp\left(\frac{t}{t(End\ )}\ln\left(\frac{L(End\ )}{L(Start)}\right)\right),$$

L(start) denoting an initial learning rate and L(end) denoting a final learning rate up to a final instant t(end) of the adaptation.

**8.** Method according to one of Claims 5 to 7, in which the coupling strength function h(i, j, t) has the following form:

$$h(i,j,t) = \exp\left(-\frac{\|i-j\|^2}{2 \bullet s^2(t)}\right)$$

where

$$s(t) = s(Start) \bullet \exp\left(\frac{t}{t(Ende)}\ln\left(\frac{s(Ende)}{s(Start)}\right)\right),$$

s(start) denoting a prescribed initial range and s(end) denoting a prescribed final range up to a final instant t(end) of the adaptation.

**9.** Method according to one of the preceding claims,

- in which the output values a(i) are determined by the following relationship:

$$a(v,m(i)) = \|v - m(i)\|^2 = \sum_{k=1}^{M}(v(k) - m(i,k))^2 ,$$

and,

- in which the optimum output values are formed by the minimum output values a(i).

**10.** Method according to one of the preceding claims,

- in which the output values a(i) are determined by the following relationship:

$$a(v,m(i)) = \sum_{k=1}^{M} g(v,k) \bullet (v(k) - m(i,k))^2 ,$$

the weights g(v, k) representing a measure of the reliability of the values of the components v(k) of the master vector v, and

- in which the optimum output values are formed by the minimum output values a(i).

**11.** Method according to one of the preceding claims,

- in which the output values a(i) are determined by the following relationship:

$$a(v,m(i)) = \sum_{k=1}^{M} m(i,k) \bullet v(k) ,$$

and,

- in which the optimum output values are formed by the maximum output values a(i).

**12.** Method according to one of the preceding claims, in which the position parameters x(i) have at least rotational angles referred to three axes of a spatial coordinate system.

## Revendications

**1.** Procédé d'évaluation des paramètres de position d'un objet dans l'espace à partir d'une image bidimensionnelle au moyen d'un réseau de Kohonen avec une grille spatiale de neurones

a) dans lequel au moyen de nombres entiers i, qui identifient de manière univoque chaque neurone i du réseau de Kohonen avec une grille spatiale de neurones, on prédétermine des vecteurs de pondération indiciables m(i) = (m(i, 1), ..., m(i, )) de la dimension M et des paramètres de position x(i) = (x(i, 1), ..., x(i, N) de la dimension N correspondant au vecteur de pondération m(i), un point (i(1), i(2), i(3)) sur une grille de l'espace tridimensionnel correspondant de façon réciproque et univoque à chaque indice i,
b) dans lequel on crée à partir des coordonnées bidimensionnelles p(k) et q(k) de points caractéristiques dans l'image un vecteur type v = (v(1), ..., v(k), ..., v(M)), où v(k) décrit à chaque fois un point caractéristique dans l'image sous la forme v(k) = (p(k), q(k)),
c) dans lequel le vecteur type v = v(1), ..., v(k), ..., v(M) est associé à chaque neurone i du réseau de Kohonen,
d) dans lequel on détermine dans chaque neurone i du réseau de Kohonen une valeur de sortie respective a (i) = a (v, m(i)) pour le vecteur type associé v = v(1), ..., v(k), ..., v(M), et
e) dans lequel on détermine les paramètres de position recherchés à partir du paramètre de position x(i) = (x (i, 1), ..., x(i, N) correspondant au neurone respectif, qui comporte la valeur de sortie optimale a(v, m(i)).

**2.** Procédé d'évaluation des paramètres de position d'un objet dans l'espace à partir d'une image bidimensionnelle au moyen d'un réseau de Kohonen avec une grille spatiale de neurones

- dans lequel on exécute les étapes a) à d) du procédé selon la revendication 1,
- dans lequel on détermine pour tous les points de grille u, à partir d'un milieu environnant U prédeterminé d'un point de grille w identifié par le neurone i comportant la valeur de sortie optimale a(v, m(i), un optimum d'une

fonction

$$A (u, b) = a(v, b . m(w) + (1 - b) . m(u))$$

d'une variable réelle b avec $0 \leq b \leq 1$.

- dans lequel, parmi tous les points de grille u du milieu environnant du point de grille w, on détermine le point de grille opt., pour lequel on a :
  A(opt, b(opt)) est optimal parmi tous les A(u, b(u)),
  b(u) décrivant la position de l'optimum de A(u, b) comme fonction de b dans l'intervalle $0 \leq b \leq 1$, et
- dans lequel on obtient les paramètres de position recherchés x(i) par la relation

$$x(i) = b(opt) . x(w) + (1\text{-}b(opt)) . x(opt)$$

comme combinaison linéaire convexe des paramètres de position des points de grille.

**3.** Procédé d'évaluation des paramètres de position d'un objet dans l'espace à partir d'une image bidimensionnelle au moyen d'un réseau de Kohonen avec une grille spatiale de neurones

- dans lequel on exécute les étapes a) à d) du procédé selon la revendication 1,
- dans lequel on détermine pour tous les points de grille u, à partir d'un milieu environnant U prédeterminé d'un point de grille w identifié par le neurone i comportant la valeur de sortie optimale a(v, m(i)), un optimum d'une fonction

$$A(b(u),b(w)) = a(v, b(w) . m(w) + \sum_{u \neq w} b(u). m(u))$$

d'une variable réelle b avec $0 \leq b \leq 1$, et

- dans lequel on obtient les paramètres de position recherchés x(i) par la relation

$$x(i) = b(w,opt) . x(w) + \sum_{u \neq w} b(u,opt) . x(u)$$

comme combinaison linéaire convexe des paramètres de position x(w) et x(u).

**4.** Procédé de reconnaissance d'un objet et d'évaluation des paramètres de position d'un objet dans l'espace à partir d'une image bidimensionnelle au moyen d'un réseau de Kohonen selon l'une des revendications 1 à 3,
dans lequel, outre les paramètres de position, on prend en considération pour la reconnaissance de l'objet des identificateurs de l'objet à reconnaître, correspondant aux neurones i.

**5.** Procédé d'adaptation de vecteurs de pondération m(i) = (m(i, 1), ..., m(i, M)) pour l'évaluation des paramètres de position d'un objet dans l'espace à partir d'une image bidimensionnelle au moyen d'un réseau de Kohonen avec une grille spatiale de neurones

a) dans lequel au moyen de nombres entiers i, qui identifient de manière univoque chaque neurone i du réseau de Kohonen avec une grillé spatiale de neurones, on prédétermine des vecteurs de pondération indiciables m(i) = (m(i, 1), ..., m(i, M)) de la dimension M et des paramètres de pondération x(i) = (x(i, 1, ..., x(i, N)) de la dimension N correspondant au vecteur de pondération m(i), un point (i(1), i(2, i(3)) de l'espace tridimensionnel correspondant de façon univoque et réciproque à chaque indice i, et
b) dans lequel à chaque moment t de l'adaptation

- on prédétermine un rythme d'apprentissage L(t) décroissant régulièrement avec le temps,
- on prédétermine une fonction de force de couplage h(i, j, t) qui fait correspondre à chacun des deux points (i(1), i(2), i(3); j(1), j(2), j(3)) d'une grille constituée par les neurones i du réseau de Kohonen une force de couplage h qui décroît régulièrement avec la distance entre les points de grille et régulièrement avec le temps,
- on prédétermine un vecteur type d'apprentissage v(t) = (v(1, t), ..., v(M, t) de la dimension M, créé à partir de coordonnées bidimensionnelles de points caractéristiques de l'image, et des paramètres de position

XT(t) = XT(1, t), ..., XT(N, t)) appartenant à ce vecteur type d'apprentissage.

- on détermine à l'instant t pour chaque neurone i, à partir du vecteur type d'apprentissage v(t) prédéterminé et des vecteurs instantanés de pondération m(i, t) à l'instant t, la valeur de sortie instantanée a(i, t) = a (v, t), m(i,t)).
- dans lequel on détermine le neurone w possédant la valeur de sortie optimale a(v, m(i)),
- dans lequel on adapte les vecteurs de pondération m(i, t) de chaque neurone i au moyen des relations

$$m(i, t+1) = m(i, t) + L(t) \bullet h(i, w, t) \bullet (v(t) - m(i,t))$$

$$x(i, t+1) = x(i, t) + L(t) \bullet h(i, w, t) \bullet (XT(t) - x(i, t)).$$

**6.** Procédé selon la revendication 5,

- dans lequel on prend de plus en considération des identificateurs de reconnaissance de l'objet lors de l'adaptation.

**7.** Procédé selon l'une des revendications 5 ou 6,

- dans lequel le rythme d'apprentissage L(t) est de la forme suivante

$$L(t) = L(\text{commencement}).\exp\left(\frac{t}{t(\text{fin})}\ \ln\left(\frac{L(\text{fin})}{L(\text{commencement})}\right)\right)$$

où L(commencement) représente un rythme d'apprentissage initial et L (fin) un rythme d'apprentissage final au moment final t(fin) de l'adaptation.

**8.** Procédé selon l'une des revendications 5 à 7,

- dans lequel la fonction de force de couplage h (i, j, t) est de la forme suivante

$$h(i,j,t) = \exp\left(-\frac{\|i - j\|^2}{2\ .\ s^2(t)}\right)$$

avec

$$s(t) = s(\text{commencement})\ .\ \exp\left(\frac{t}{t(\text{fin})}\ \ln\left(\frac{s(\text{fin})}{s(\text{commencement})}\right)\right)$$

où s(commencement) représente une valeur initiale prédéterminée et s(fin) une valeur finale prédéterminée au moment final t(fin) de l'adaptation.

**9.** Procédé selon l'une des revendications précédentes,

- dans lequel on obtient les valeurs de sortie a(i) au moyen de la relation suivante

$$a(v, m(i)) = \|v - m(i)\|^2 = \sum_{k=1}^{M}(v(k) - m(i,k))^2, \text{ et}$$

- dans lequel les valeurs de sortie optimales sont constituées par les valeurs de sortie minimales a(i).

**10.** Procédé selon l'une des revendications précédentes,

- dans lequel on obtient la valeur de sortie a(i) au moyen de la relation suivante

$$a(v(m(i)) = \sum_{k=1}^{M} g(v,k) \,.\, (v(k) - m\,(i,k))^2$$

où les pondérations g(v, k) représentent une mesure de la fidélité des composantes v(k) du vecteur type v, et

- dans lequel les valeurs de sortie optimales sont constituées par les valeurs de sortie minimales a(i).

**11.** Procédé selon l'une des revendications précédentes,

- dans lequel on obtient les valeurs de sortie a(i) au moyen de la relation suivante

$$a\,(v, m\,(i)) = \sum_{k=1}^{M} m\,(i,k) \cdot (v\,(k), \text{ et}$$

- dans lequel les valeurs de sortie optimales sont constituées par les valeurs de sortie maximales a(i).

**12.** Procédé selon l'une des revendications précédentes,

- dans lequel les paramètres de position x(i) comportent au moins des angles de rotation rapportés aux trois axes d'un système de coordonnées spatiales.

FIG 1

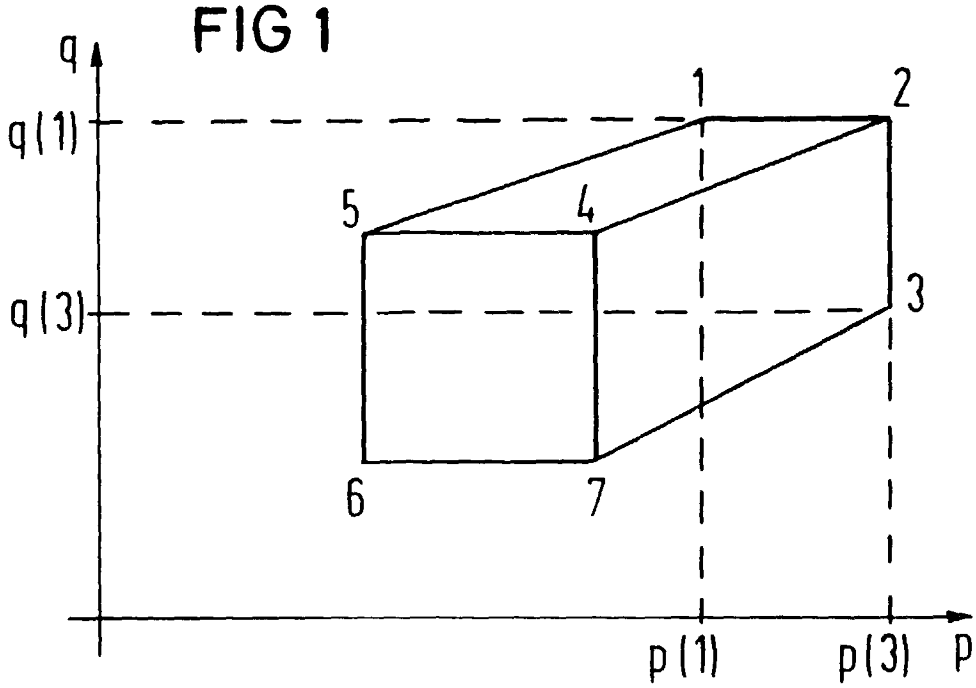
q
q(1)
q(3)
1
2
3
4
5
6
7
p(1)
p(3)
p

FIG 2

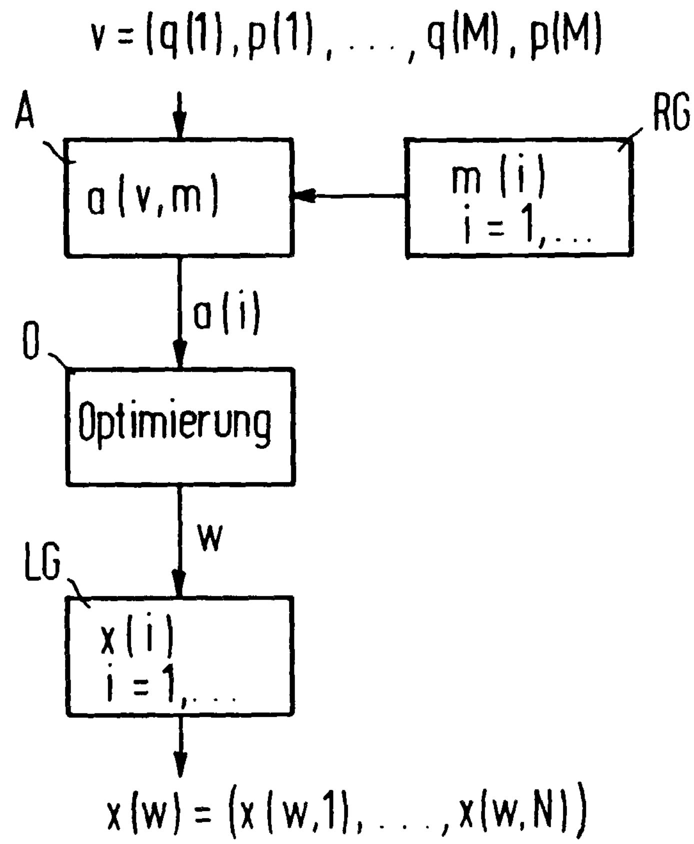
v = (q(1), p(1), . . . , q(M), p(M))
A
a(v,m)
RG
m(i)
i = 1,...
a(i)
O
Optimierung
w
LG
x(i)
i = 1,...
x(w) = (x(w,1), . . . , x(w,N))

FIG 3

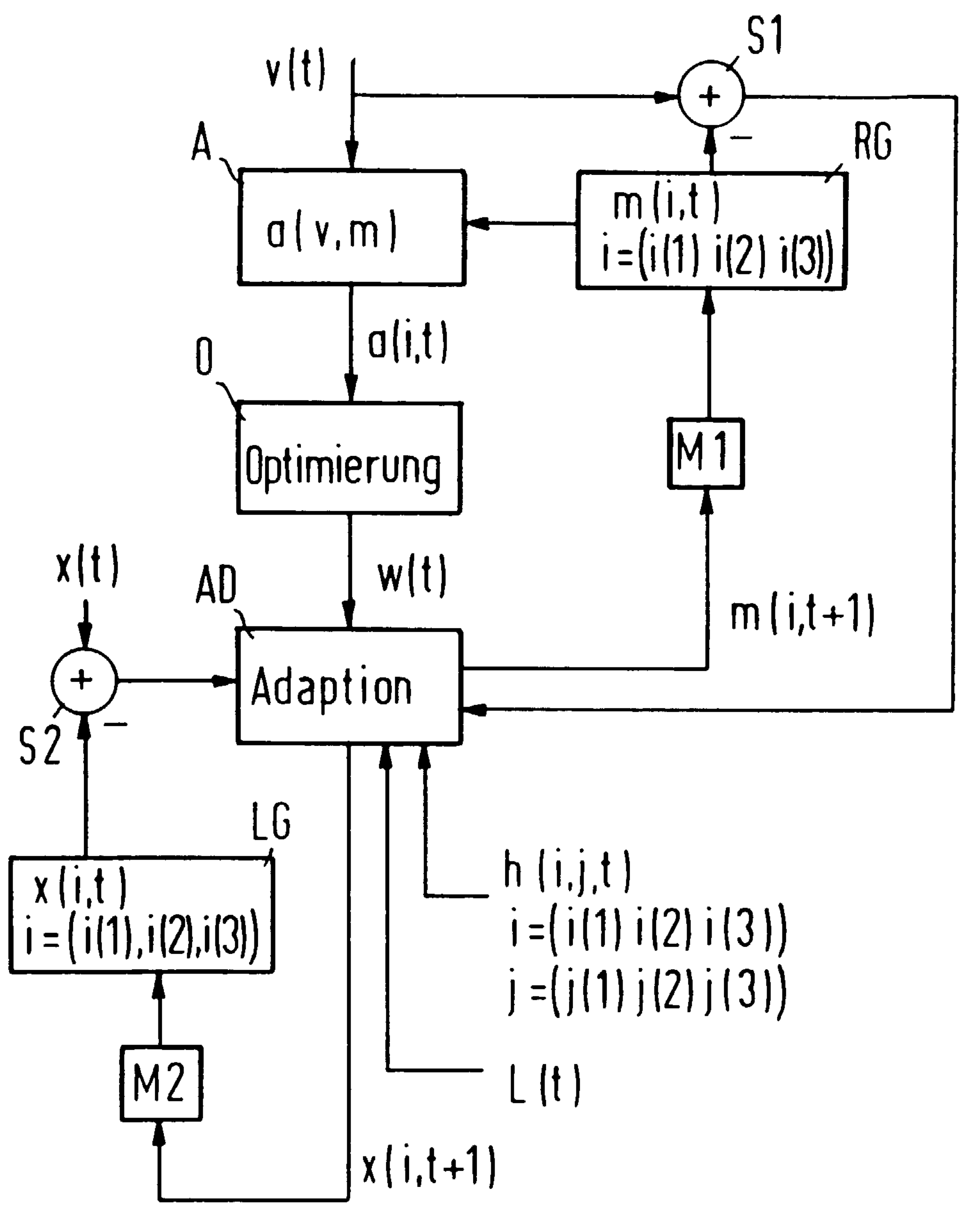
v(t)
S1
+
A
RG
a(v,m)
m(i,t)
i=(i(1) i(2) i(3))
a(i,t)
O
Optimierung
M1
x(t)
AD
w(t)
m(i,t+1)
+
Adaption
S2
LG
h(i,j,t)
x(i,t)
i=(i(1),i(2),i(3))
i=(i(1) i(2) i(3))
j=(j(1) j(2) j(3))
M2
L(t)
x(i,t+1)